# EUROPÄISCHE PATENTANMELDUNG

(11) **EP 2 653 698 A1**
(43) Veröffentlichungstag der Anmeldung: **23.10.2013**
(21) Anmeldenummer: 12003580.3
(22) Anmeldetag: 08.05.2012
(51) Int. Cl.: F02C 3/20, F02C 3/34

(54) **Verfahren zum Betrieb einer Gasturbineneinheit**

(30) Priorität: 19.04.2012 DE 102012007832
(71) Anmelder: Linde Aktiengesellschaft, 80331 München (DE)
(72) Erfinder: Alekseev, Alexander, Dr., 82515 Wolfratshausen (DE)

(57) **Zusammenfassung**

In einer Gasturbineneinheit (10), bei dem durch Verbrennung eines Brennstoffs (F) in einer komprimierten Gasatmosphäre in einer Brennkammer (11) ein Heißgas erzeugt und mit dem Heißgas eine Gasturbine (13) angetrieben wird, wird die Gasatmosphäre mit wenigstens einem leichten Inertgas (LG) angereichert.

## Beschreibung

Die Erfindung betrifft ein Verfahren zum Betrieb einer Gasturbineneinheit, eine für einen entsprechenden Betrieb eingerichtete Gasturbineneinheit, eine Energieerzeugungsanlage mit einer derartigen Gasturbineneinheit sowie eine entsprechende Steuereinrichtung.

### Stand der Technik

Gasturbinen sind grundsätzlich bekannt. Der gängige Sprachgebrauch bezeichnet mit dem Begriff "Gasturbine" auch eine Anordnung, die einen Verdichter, die eigentliche Gasturbine sowie eine zwischen Verdichter und Turbineneinheit geschaltete Brennkammer umfasst. Im Rahmen dieser Anmeldung werden diese Komponenten unter dem Begriff "Gasturbineneinheit" zusammengefasst.

Der Brennkammer einer Gasturbineneinheit wird über den Verdichter komprimiertes Gas (im Rahmen dieser Anmeldung als "Gasgemisch" bezeichnet) zugeführt. Über einen Brennstoffeinlass gelangt (in der Regel flüssiger oder gasförmiger) Brennstoff in die Brennkammer. Der Brennstoff wird in der Brennkammer mit dem Gasgemisch zu sogenanntem Heißgas verbrannt. Das Heißgas wird in der Gasturbine entspannt, wobei thermische in mechanische Energie gewandelt wird, die die Gasturbine antreibt. Ein Teil der umgewandelten Energie wird zum Betrieb des Verdichters verwendet, der verbleibende Anteil dient z.B. zum Antrieb eines Generators zur Stromerzeugung, eines Propellers, eines Rotors, eines Kompressors, einer Pumpe oder dergleichen. Nach der Entspannung wird das entspannte Heißgas in der Regel als Abgas abgeblasen oder z.B. als Wärmequelle für einen Dampfturbinen-Kraftwerksprozess verwendet (sogenannte Gas-und-Dampf-Verfahren, GuD).

Aufgrund von Klimaaspekten ist eine Reduktion des durch Energieerzeugungsanlagen emittierten Kohlendioxids wünschenswert. Gleichzeitig kann Kohlendioxid für unterschiedlichste Zwecke in chemischen und physikalischen Verfahren verwendet werden, beispielsweise zur Erdöl-Tertiärförderung, der Ausbeutung von Flöz- bzw. Grubengasen sowie zur Herstellung von Treibstoffen, Methanol und Harnstoff. Der Begriff "Carbon Capture and Storage" (CCS) bezeichnet Technologien, die dazu beitragen, die Menge des in die Atmosphäre emittierten Kohlendioxids zu reduzieren.

Das bei Verbrennungsprozessen anfallende Kohlendioxid muss aus den entsprechenden Rauchgasen abgetrennt werden. Diese Abtrennung ist umso einfacher und effizienter, je höher die Konzentration von Kohlendioxid im Abgas ist. Mit herkömmlich betriebenen Gasturbinen kann der Kohlendioxidgehalt im Abgas aus den nachfolgend erläuterten Gründen jedoch nicht beliebig gesteigert werden:
Der Volumenanteil an Kohlendioxid im Abgas von Gasturbinen beträgt üblicherweise weniger als 5 Vol.-%. Dieser Wert ist deshalb gering, weil beim Betrieb einer entsprechenden Gasturbine eine überproportional große Luftmenge verwendet wird. Die Luft wird in einem überstöchiometrischen Anteil zugegeben, der Sauerstoff nicht vollständig verbrannt. Hierdurch wird Kohlendioxid stark verdünnt. Zur Abtrennung müssen daher große Abgasmengen mit relativ geringem Kohlendioxidgehalt bearbeitet werden. Die Abtrennung kann in diesem Fall lediglich mittels chemischer Wäscher realisiert werden, was in der Praxis teuer und ineffizient ist.

Es ist bekannt, die Kohlendioxidkonzentration im Abgas von Gasturbinen durch eine sogenannte Rauchgasrückführung leicht zu erhöhen. Hierbei wird das Abgas auf Umgebungstemperatur abgekühlt. Das entstehende Kondensatwasser wird abgetrennt. Nachfolgend wird der Abgasstrom in zwei Teilströme aufgeteilt. Ein erster Teilstrom wird zurück zum Verdichter geführt der dort angesaugten Luft beigemischt. Der zweite Teilstrom wird zur Kohlendioxidabtrennung geleitet. Durch einen derartigen Betrieb kann der Kohlendioxidgehalt im Abgas auf etwa 6 bis 8 Vol.-% erhöht werden. Diese Obergrenze kann zunächst nicht überschritten werden, weil die Sauerstoffkonzentration in der Brennkammer durch die Zumischung rückgeführten Abgases naturgemäß reduziert wird. Bei Sauerstoffkonzentrationen von weniger als 16 Vol.-% zündet das Gemisch jedoch nurmehr schlecht.

Die Sauerstoffkonzentration kann durch externe Zugabe gesteigert werden. Dies erlaubt letztlich jedoch nur eine Erhöhung der Kohlendioxidkonzentration im Abgas auf etwa 12 bis 16 Vol.-%. Herkömmliche Verdichter und Gasturbinen sind nämlich für definierte Luftmassendurchsätze und Gasdichten ausgelegt. Diese Auslegung stellt eine Grenze für die erzielbaren Kohlendioxidkonzentrationen dar, denn mit steigendem Kohlendioxidgehalt wird das zu verdichtende und expandierte Gas immer schwerer. Kohlendioxid besitzt ein Molekulargewicht von 44 gegenüber Luft mit einem Molekulargewicht von 29. Bei einem Gehalt von 12 bis 16 Vol.-% Kohlendioxid ist die obere Auslegungsgrenze entsprechender Anlagen in der Regel erreicht und die verwendeten Verdichter und/oder Turbinen sind an ihrer Kapazitätsgrenze angelangt. Für Gase mit höherem Kohlendioxidgehalt sind momentan keine Gasturbinen auf dem Markt verfügbar.

### Es besteht daher der Bedarf nach Möglichkeiten zu einer weiteren Erhöhung der Kohlendioxidkonzentration im Abgas von Gasturbinen.

### Offenbarung der Erfindung

Vor diesem Hintergrund schlägt die Erfindung ein Verfahren zum Betrieb einer Gasturbineneinheit, eine für einen entsprechenden Betrieb eingerichtete Gasturbineneinheit, eine Anlage mit einer derartigen Gasturbineneinheit sowie eine entsprechende Steuereinrichtung mit den Merkmalen der unabhängigen Ansprüche vor. Bevorzugte Ausgestaltungen sind in den jeweiligen abhängigen Ansprüchen angegeben und werden nachfolgend erläutert.

### Vorteile der Erfindung

Die vorliegende Erfindung beruht auf der Erkenntnis, dass das mittlere Molekulargewicht sowie andere Parameter eines Gases in einer Gasatmosphäre in einer Brennkammer, und damit in einer Gasturbineneinheit, durch eine Beimischung wenigstens eines leichten Inertgases so eingestellt werden können, dass auch konventionelle Gasturbinen für ein entsprechendes Verfahren verwendbar sind.

Als "leichtes Inertgas" wird dabei im Rahmen dieser Anmeldung ein Inertgas bezeichnet, das einer entsprechenden Gasatmosphäre beigegeben werden kann, und das bei einer Verbrennung nicht oder nur zu geringen Teilen umgesetzt wird. Besonders bevorzugte leichte Inertgase sind hierbei beispielsweise Helium und/oder Neon. Insbesondere Helium eignet sich aufgrund seines geringen Atomgewichts von ca. 4 und seiner geringen Dichte von nur 0,069 g/cm³ bei Normaldruck in besonderer Weise zur erläuterten "Verdünnung" einer entsprechenden Gasatmosphäre. Jedoch kann auch Neon für diese Zwecke gut verwendet werden. Neon weist ein Atomgewicht von 20 und eine Dichte von 0,4 g/cm³ auf. Dies sind sehr viel geringere Werte als die zuvor genannten Parameter hinsichtlich Kohlendioxid und Luft. Helium und Neon kommen als leichte Inertgase zwar nur in relativ geringen Anteilen in der Luft vor, können jedoch insbesondere durch größere Luftzerlegungsanlagen kontinuierlich bereitgestellt werden. Wie unten erläutert, umfasst die vorliegende Erfindung eine weitgehende Regeneration des wenigstens einen leichten Inertgases in einem geschlossenen Gasturbinenkreislauf, so dass sich kaum Verluste ergeben und damit auch diese relativ aufwendig herzustellenden leichten Inertgase eingesetzt werden können.

Die vorliegende Erfindung ermöglicht es damit auch, sogenannte Oxyfuel-Verfahren auf Basis von Gasturbinen mit herkömmlichen Anlagen, d.h. Gasturbinen konventioneller Bauart, zu betreiben. Bei sogenannten Oxyfuel-Verfahren wird verdichtetes Erdgas als Brennstoff in einer Brennkammer einer Gasturbine verbrannt. Hierbei wird als Oxidant verdichteter Sauerstoff eingesetzt. Das bei der Verbrennung entstehende Gas, das zunächst als Heißgas zum Betreiben der Gasturbine verwendet wird und anschließend als Rauchgas anfällt, besteht hauptsächlich aus Kohlendioxid und Wasserdampf. Weitere Bestandteile sind atmosphärische Gase wie Stickstoff, Sauerstoff und Argon sowie Oxide wie Kohlenmonoxid, Stick- und Schwefeloxide. Das Rauchgas kann auch weitere Kontaminationen wie unverbrannte Kohlenwasserstoffe enthalten, die von der jeweils verwendeten Brennstoffzusammensetzung und den Bedingungen in der Brennkammer abhängen.

Das heiße Rauchgas wird in den genannten Verfahren, wie erläutert, in der Gasturbine bis auf Umgebungsdruck entspannt. Dabei kann mechanische Energie (Leistung) zum Antrieb eines Verdichters verwendet werden und zur Erzeugung elektrischen Stroms mit Hilfe eines Generators dienen. Bei den eingangs erwähnten GuD-Verfahren wird das Abgas vom Austritt der Gasturbine zusätzlich durch einen sogenannten Abhitzekessel (Heat Recovery Steam Generator, HRSG) geführt. Die Abgaswärme wird zur Dampferzeugung verwendet. Mit Hilfe eines Dampfkreislaufs wird zusätzliche Energie (zunächst mechanische und hieraus elektrische Energie) erzeugt. Das Rauchgas wird auf etwa Umgebungstemperatur abgekühlt, der im Rauchgas enthaltene Wasserdampf dabei zum größten Teil kondensiert und in einen Flüssigkeitsabscheider abgetrennt. Das Rauchgas wird in zwei Teilströme geteilt. Ein Teilstrom wird zur Saugseite des Verdichters der Gasturbineneinheit geführt, dort verdichtet und der Brennkammer zugeleitet. In der Brennkammer wird damit das Rauchgas, zusammen mit zusätzlichem Sauerstoff, als Gasatmosphäre zur Verbrennung des Brennstoffs verwendet.

Ein zweiter Teilstrom stellt den eigentlichen Produktstrom dar. Dieser kohlendioxidhaltige Strom wird in der Regel weiter konditioniert (getrocknet, gereinigt, verdichtet usw.) und anschließend der entsprechenden Verwendung wie beispielsweise der Erdöl-tertiärförderung übergeben. Die Zuführung von Sauerstoff kann an verschiedenen Stellen einer entsprechenden Anlage (d.h. insbesondere niederdruckseitig oder hochdruckseitig eines Verdichters) erfolgen. Der Ort der Einspeisung richtet sich beispielsweise nach dem Typ der Gasturbine und/oder dem Hersteller. Der Fachmann wählt hier die günstigste Lösung nach Zweckmäßigkeit.

Erfindungsgemäß kann, wie erwähnt, Dichte und Schwere der jeweiligen Gasatmosphäre im Verdichter, der Brennkammer und der Gasturbine eingestellt werden.

Die Anreicherung der Gasatmosphäre erfolgt vorzugsweise auf wenigstens 24 ppm Helium und/oder Neon als leichtem Inertgas. Dies entspricht einem Wert oberhalb der Gehalte natürlicher Luft. Besonders vorteilhaft sind Gehalte von leichtem Inertgas von 20 bis 50%, wodurch sich die Dichte- und Masseeigenschaften natürlicher Luft auch bei hohen Kohlendioxidgehalten erreichen lassen. Derartig hohe Gehalte an leichten Inertgasen lassen sich wirtschaftlich einsetzen, weil ein Großteil, wie unten erläutert, regeneriert bzw. in einem geschlossenen Kreislauf eingesetzt wird.

Vorteilhafterweise wird, wie erläutert, zur Erzeugung der Gasatmosphäre in der Brennkammer wenigstens eine aus dem Heißgas erzeugte Gasfraktion, Sauerstoff und/oder das wenigstens eine leichte Inertgas verwendet. Wie ebenfalls erläutert, umfasst das der Erfindung zugrunde liegende Verfahren eine wenigstens teilweise Rückführung eines Rauchgases in die Brennkammer, so dass die Kohlendioxidanteile des Rauchgases kontinuierlich ansteigen und besonders einfach abgetrennt werden können.

Besonders vorteilhaft ist es, das wenigstens eine leichte Inertgas zu wenigstens 90% erneut der Gasatmosphäre zuzuführen. Dies wird dadurch bewerkstelligt, dass aus dem Rauchgas lediglich Komponenten abgetrennt werden, die das leichte Inertgas nicht enthalten. Das leichte Inertgas kann damit zu großen Anteilen aus dem Rauchgas regeneriert bzw. in diesem zurückgehalten werden. Dies ermöglicht es, auch die eingangs erwähnten relativ teuren Inertgase einzusetzen, ohne dass wirtschaftliche Nachteile entstehen. Vorteilhafterweise können im Rahmen der Erfindung wenigstens 95%, 99% oder mehr regeneriert werden. Die tatsächlichen Mengen an Verlusten richten sich nach der Auslegung einer entsprechenden Anlage. In Fällen, in denen eine ausreichende Menge leichten Inertgases kostengünstig zur Verfügung steht, kann die Regeneration zu einem geringeren Prozentsatz erfolgen, so dass die Wirtschaftlichkeit stets gewährleistet ist.

Eine erfindungsgemäße Gasturbineneinheit mit einem Verdichter, einer Brennkammer und einer Gasturbine weist Mittel zur Einspeisung wenigstens eines mit einem leichten Inertgas angereicherten Gasstroms in die Brennkammer auf. Wie erläutert, kann eine entsprechende Anlage Mittel zur Einspeisung eines reinen Inertgases aufweisen, die stromauf- oder stromab eines Verdichters angeordnet sein können. Auf diese Weise kann ein Verlust an dem wenigstens eines leichten Inertgases in dem Gaskreislauf ausgeglichen werden. Mittel zur Einspeisung wenigstens eines mit einem leichten Inertgas angereicherten Gasstroms in die Brennkammer umfassen auch entsprechende Rückführleitungen für ein Rauchgas, in dem, wie erwähnt, das wenigstens eine leichte Inertgas in angereicherter Form vorliegt.

Eine Energieerzeugungsanlage mit einer entsprechenden Gasturbineneinheit ist ebenfalls Gegenstand der Erfindung. Diese umfasst eine Rauchgasbehandlungseinheit, die dafür eingerichtet ist, wenigstens eine Komponente eines aus einer Verbrennung in der Brennkammer resultierenden Rauchgases abzutrennen und den Rest des Rauchgases der Brennkammer wieder zuzuführen. Wie erläutert, wird aus dem Rauchgas beispielsweise Kohlendioxid abgetrennt. Ferner sind vorzugsweise auch schwerere Inertgase wie Argon und/oder Stickstoff abzutrennen, da sonst eine Anreicherung von diesen Stoffen im Rauchgas unvermeidbar wäre. Dies würde zu deutlich höherem Energieaufwand bei der Kohlendioxidabtrennung führen. Eine Rauchgasbehandlungseinheit verfügt ferner auch z.B. über Entschwefelungs- und Entstickungs- und/oder Kondensationseinheiten, die eine Reinigung des Rauchgases zulassen.

Auch eine derartige Energieerzeugungsanlage ist dafür eingerichtet, wenigstens 95% oder 99% des leichten Inertgases in dem Rauchgas der Brennkammer wieder zuzuführen, sodass sich die zuvor erläuterten Einsparmöglichkeiten ergeben.

Zur Einspeisung des wenigstens einen leichten Inertgases und/oder von Sauerstoff in die Gasturbineneinheit ist eine entsprechende Energieerzeugungsanlage in geeigneter Weise eingerichtet, so dass sich die zuvor erläuterten Vorteile des erfindungsgemäßen Verfahrens ergeben.

Wie mehrfach erwähnt, sind eine Kohlendioxid- und/oder eine Inertgasabtrenneinrichtung zur Abtrennung von Kohlendioxid bzw. (schwereren) Inertgasen wie Argon und/oder Stickstoff aus dem Rauchgas vorteilhaft. Dies gilt in gleicher Weise für eine Entschwefelungs- und/oder Entstickungseinrichtung. Die Kohlendioxidabtrenneinrichtung umfasst vorteilhafterweise eine kryogene Kohlendioxidabscheideranlage und/oder einen chemischen Wäscher. Es können auch Adsorptions-, Membran- oder Ausfrierverfahren zur Abtrennung eingesetzt werden. Die Abscheideranlage kann z.B. als Single- oder Dual-Flash-Abscheideranlage, wie unten näher erläutert, ausgebildet sein. Hierdurch ergibt sich eine besonders effektive Abtrennung von Kohlendioxid.

Eine Inertgasabtrenneinrichtung zur Abtrennung von Argon und/oder Stickstoff umfasst ebenfalls wenigstens einen kryogenen Abscheider und zwar insbesondere einen Abscheider, der in einer in der Energieerzeugungsanlage ebenfalls verbauten Luftzerlegungsanlage angeordnet ist. Eine Luftzerlegungsanlage kann ebenfalls vorgesehen sein, um eine autonome Versorgung mit den erforderlichen Medien, insbesondere dem wenigstens einen leichten Inertgas und/oder mit Sauerstoff, zu gewährleisten.

Eine erfindungsgemäß vorgesehene Energieerzeugungsanlage profitiert von den zuvor erläuterten Vorteilen. Die erfindungsgemäße Steuereinrichtung ist insbesondere dafür eingerichtet, einen Anteil eines leichten Inertgases in dem geschlossenen Gasturbinenkreislauf zu ermitteln und/oder durch Zudosierung des leichten Inertgases einzustellen. Dies erfolgt vorzugsweise automatisch. Damit wird ein sicherer Betrieb einer entsprechenden Anlage mit einer Gasturbineneinheit ermöglicht, weil Bedienungsfehler reduziert werden können. Die Steuereinrichtung weist vorzugsweise eine Notabschaltfunktion auf, die dafür eingerichtet ist, die Anlage abzuschalten, wenn ein Anteil des leichten Gases im Gasturbinenkreislauf einen kritischen Wert unterschreitet, der zu einer Beschädigung des Verdichters und/oder der Gasturbine führen könnte und/oder wenn kein leichtes Gas zur Zudosierung zur Verfügung steht.

Bevorzugte Ausführungsformen werden unter Bezugnahme auf die beigefügten Zeichnungen weiter erläutert..

Kurze Beschreibung der Zeichnungen
- Figur 1: zeigt eine Anlage mit einer Gasturbine gemäß dem Stand der Technik in schematischer Darstellung.
- Figur 2: zeigt eine Anlage mit einer Gasturbine gemäß einer Ausführungsform der Erfindung in schematischer Darstellung.
- Figur 3: zeigt eine Anlage mit einer Gasturbine gemäß einer Ausführungsform der Erfindung in schematischer Darstellung.
- Figur 4: zeigt eine Anlage mit einer Gasturbine gemäß einer Ausführungsform der Erfindung in schematischer Darstellung.
- Figur 5: zeigt eine Anlage mit einer Gasturbine und einer Gasversorgungseinheit gemäß einer Ausführungsform der Erfindung in schematischer Darstellung.
- Figur 6: zeigt eine Anlage mit einer Gasturbine und einer Gasversorgungseinheit gemäß einer Ausführungsform der Erfindung in schematischer Darstellung.
- Figuren 7A bis 7C: zeigen Kohlendioxidabtrenneinrichtungen für Rauchgas gemäß Ausführungsformen der Erfindung in schematischer Darstellung.
- Figur 8: zeigt eine Kohlendioxidabtrenneinrichtung für Rauchgas gemäß einer Ausführungsform der Erfindung in schematischer Darstellung.
- Figur 9: zeigt eine Inertgasabtrenneinrichtung für Rauchgas gemäß einer Ausführungsform der Erfindung in schematischer Darstellung.
- Figur 10: zeigt eine Rauchgasbehandlungsanlage gemäß einer Ausführungsform der Erfindung in schematischer Darstellung.

### Ausführungsformen der Erfindung

In den Figuren sind gleiche oder gleich wirkende Elemente mit identischen Bezugszeichen angegeben. Diese werden nicht wiederholt erläutert.

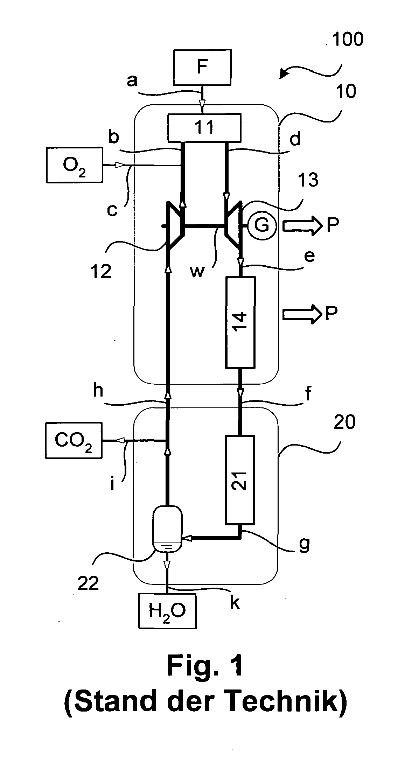

In Figur 1 ist eine Energieerzeugungsanlage mit einer Gasturbine 13 gemäß dem Stand der Technik dargestellt und insgesamt mit 100 bezeichnet. Eine derartige Energieerzeugungsanlage 100 kann der vorliegenden Erfindung zugrundeliegen. Die Anlage umfasst in der dargestellten Ausführungsform eine Turbineneinheit 10 und eine Rauchgasbehandlungseinheit 20.

Die Turbineneinheit 10 weist einen Verdichter 12 und eine Gasturbine 13 auf. Der Verdichter 12 und die Gasturbine 13 können mechanisch über eine gemeinsame Welle w miteinander und mit einem Generator G gekoppelt sein.

Dem Verdichter 12 kann über eine Leitung h ein Gas oder Gasgemisch zugeführt werden. Das über die Leitung h zugeführte Gas oder Gasgemisch wird im Verdichter 12 verdichtet und über eine Leitung b mit hohem Druck in eine Brennkammer 11 eingespeist. Die Leitung h ist damit in einem Niederdruckbereich der Anlage 100 angeordnet, die Leitung b in einem Hochdruckbereich. In dem Hochdruckbereich wird über eine Leitung c Sauerstoff O₂ eingespeist und ebenfalls der Brennkammer 11 zugeführt. Über eine Leitung a wird ein, typischerweise gasförmiger, Brennstoff F in die Brennkammer 11 eingeleitet. Der Brennstoff F wird in der Brennkammer 11 in einer Gasatmosphäre verfeuert, die sich aus dem mittels des Verdichters 12 verdichteten Gasgemisch und dem über die Leitung c eingespeisten Sauerstoff zusammensetzt.

Aus der Verbrennung resultiert sogenanntes Heißgas, das über eine Leitung d die Brennkammer verlässt und in die Gasturbine 13 gelangt. Das expandierende Heißgas treibt die Gasturbine 13 an. Durch die Gasturbine 13 kann über die Welle w einerseits der Verdichter 12 und andererseits der Generator G angetrieben werden. Über den Generator G kann dem System elektrische Leistung P entnommen werden.

Über eine Leitung e verlässt das in der Gasturbine 13 entspannte Heißgas als noch heißes Rauchgas die Gasturbine 10 und gelangt im dargestellten Beispiel in einen Abhitzekessel 14 (sogenannter Heat Recovery Steam Generator, HRSG). In dem Abhitzekessel 14 wird mittels des noch heißen Rauchgases Dampf erzeugt und dem Rauchgas damit Wärme entzogen. Der Dampf kann beispielsweise einen nicht dargestellten weiteren Generator antreiben, wodurch weitere Leistung P generiert wird.

Nach dem Durchlaufen des Abhitzekessels 14 wird das teilweise abgekühlte Rauchgas über eine Leitung f aus der Gasturbineneinheit 10 ausgeleitet und gelangt in die Rauchgasbehandlungseinheit 20. In der Rauchgasbehandlungseinheit 20 ist ein Rauchgaskühler 21 vorgesehen. Das in dem Rauchgaskühler 21 weiter abgekühlte Rauchgas wird über eine Leitung g einem Abscheider 22 zugeführt. Über eine bodenseitig des Abscheiders 22 angeordnete Leitung k kann Kondensatwasser H₂O (gegebenenfalls mit auskondensierten Verunreinigungen) entnommen werden. Kopfseitig des Abscheiders 22 wird eine gasförmige Fraktion entnommen. Über eine nicht dargestellte Kohlendioxidabtrenneinrichtung kann aus einem Teil des getrockneten Rauchgases über eine Leitung i Kohlendioxid CO₂ abgetrennt werden. Das verbleibende Gasgemisch wird über die Leitung h dem Verdichter 12 erneut zugeführt, dort komprimiert und nach der Verdichtung über die Leitung c mit Sauerstoff O₂ beaufschlagt. Hierdurch ist, trotz erhöhter Kohlendioxidanteile in dem Rauchgas in Leitung h, eine Zündfähigkeit des in der Brennkammer 11 erzeugten Gemischs sichergestellt.

Wie erläutert, wird jedoch das mit Kohlendioxid angereicherte Gas zunehmend schwerer. Daher ist der Betrieb einer entsprechenden Anlage 100 nicht unproblematisch, weil insbesondere die Verdichter 12 und/oder die Gasturbine 13 zum Betrieb mit vergleichsweise schwerem Kohlendioxid ausgelegt sein müssen.

Die Leitungen b, d, e, f, g und h bilden in der dargestellten Anlage 100 einen im Wesentlichen geschlossenen Gaskreislauf, dem lediglich über die Leitung a Brennstoff F und über die Leitung c Sauerstoff O₂ zugeführt und über die Leitungen k und i Kondensatwasser H₂O bzw. Kohlendioxid CO₂ entzogen wird.

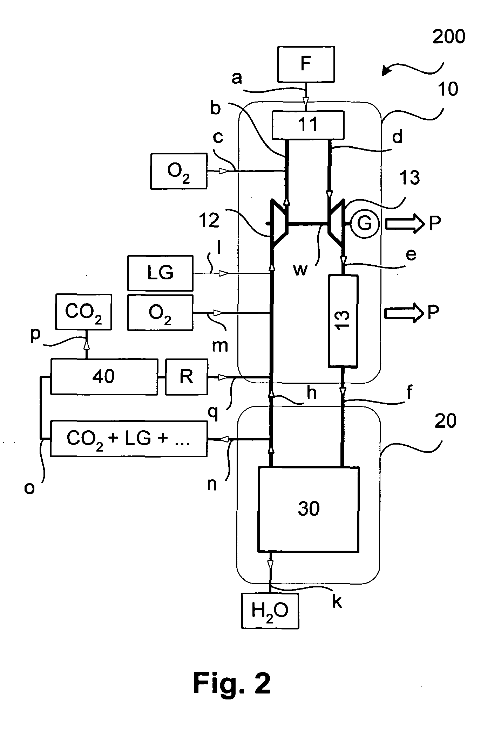

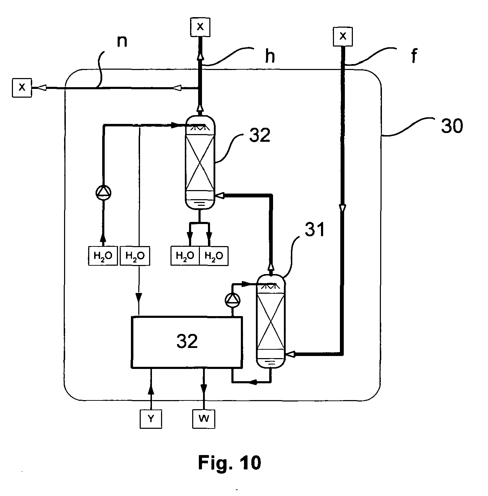

Figur 2 zeigt, insgesamt mit 200 bezeichnet, eine Anlage mit einer Gasturbine 13 gemäß einer besonders bevorzugten Ausführungsform der Erfindung. Diese verfügt über die wesentlichen Komponenten der zuvor erläuterten Anlage 100. In der Rauchgasbehandlungseinheit 20 ist eine Rauchgasbehandlungsanlage 30 schematisch dargestellt. Diese wird in einer beispielhaften Ausgestaltung in Figur 10 unten näher erläutert.

Als zentraler Unterschied zu der in der Figur 1 erläuterten Anlage 100 ist eine Leitung I vorgesehen, über die der durch die Leitungen b, d, f und h gebildete Gaskreislauf in der Anlage 200 mit einem leichten Inertgas LG, beispielsweise einem Helium-Neon-Gemisch, beaufschlagt werden kann. Das leichte Inertgas LG wird in dem Gaskreislauf der Anlage 200 zyklisch mitgeführt, so dass über die Leitung I lediglich allfällige Verluste ausgeglichen werden müssen.

Aufgrund des Anteils des leichten Inertgases LG im Gaskreislauf der Anlage 200 kann diese mit einem schwächer ausgelegten Verdichter 12 und einer entsprechenden Gasturbine 13 ausgestattet sein. In der Anlage 200 ist zusätzlich eine niederdruckseitige Einspeisung von Sauerstoff O₂ über eine Leitung m vorgesehen.

Um eine Abreicherung an leichtem Inertgas LG zu verhindern, wird eine über eine Leitung n ausgeleitete Rauchgasfraktion, die unter anderem Kohlendioxid CO₂ und das leichte Inertgas LG aufweist (CO₂ + LG + ...), ausgeschleust und aus dieser ausgeschleusten Fraktion das leichte Inertgas LG weitgehend regeneriert. Die genannte Fraktion, nachfolgend auch mit X bezeichnet, gelangt in eine Kohlendioxidabtrenneinrichtung 40, die vorteilhafterweise dazu ausgebildet ist, über eine Leitung p reines Kohlendioxid CO₂, ohne nennenswerte Anteile des leichten Inertgases LG, abzutrennen. Mit anderen Worten findet sich das leichte Inertgas LG weitgehend in einem nach der Kohlendioxidabtrennung verbleibenden Rest R der ausgeschleusten Rauchgasfraktion wieder. Der Rest R wird über eine Leitung q dem Gaskreislauf und damit der Gasturbineneinheit 10 erneut zugeführt. Durch eine derartige zyklische Anordnung ergeben sich Kosteneinsparungen, weil aufgrund der Leichtgasregeneration keine großen Mengen des leichten Inertgases LG zugeführt werden müssen.

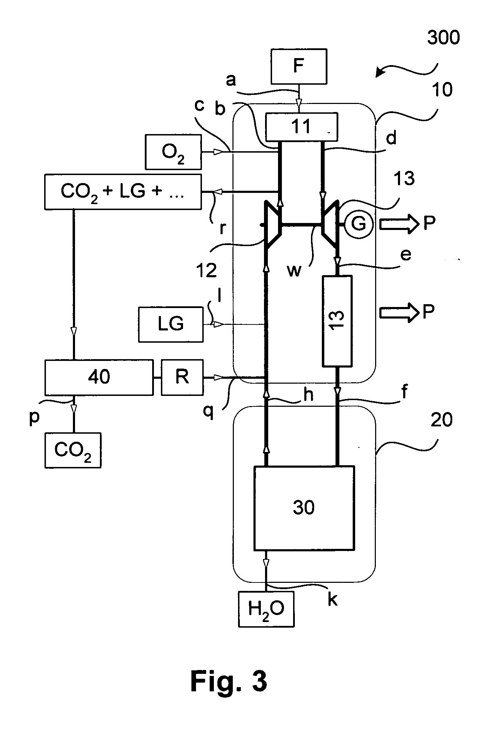

In Figur 3 ist eine Anlage 300 gemäß einer weiteren Ausführungsform der Erfindung schematisch dargestellt, die im Vergleich zu der in Figur 2 dargestellten Anlage 200 eine abweichende Konfiguration aufweist. Die Ausschleusung der Kohlendioxid CO₂ und leichtes Inertgas LG aufweisenden Rauchgasfraktion erfolgt hier hochdruckseitig des Verdichters 12 über eine Leitung r. Im Übrigen arbeitet die Anlage 300 vergleichbar zu der zuvor erläuterten Anlage 200. Die über Leitung r ausgeschleuste Rauchgasfraktion X gelangt auch hier in eine Kohlendioxidabtrenneinrichtung 40, in der über eine Leitung p Kohlendioxid CO₂ abgetrennt wird. Der verbleibende Rest R, der das leichte Inertgas LG aufweist, wird über eine Leitung q in den Gaskreislauf zurückgeführt.

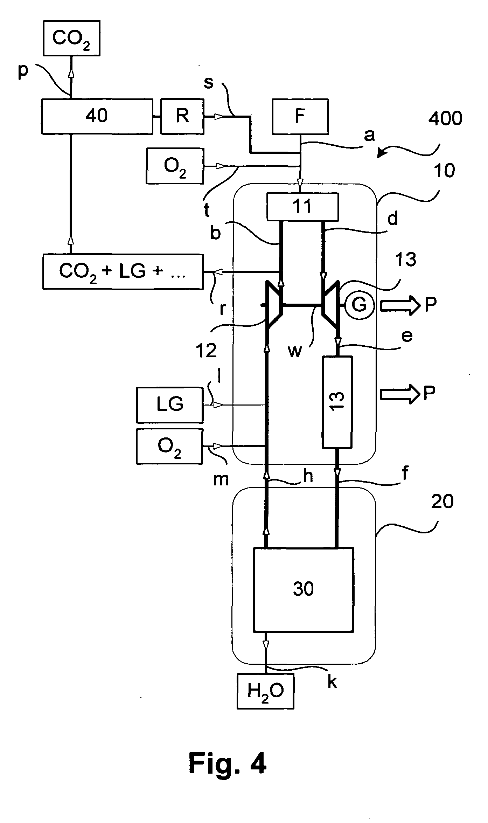

In Figur 4 ist eine Anlage 400 gemäß einer weiteren Ausführungsform der Erfindung schematisch dargestellt. Diese weist eine gegenüber den Anlagen 200 und 300 nochmals abweichende Konfiguration auf. Die Ausschleusung der Kohlendioxid CO₂ und leichtes Inertgas LG aufweisenden Rauchgasfraktion X erfolgt hier, wie in der Anlage 300, hochdruckseitig des Verdichters 12 über eine Leitung r. Das nach der Kohlendioxidabtrennung verbleibende Restgas R, das das leichte Inertgas LG aufweist, wird hier jedoch über eine Leitung s in eine Brennstoffzuleitung a eingespeist und gelangt auf diese Weise in die Brennkammer 11. Eine weitere Leitung t kann ebenfalls in die Brennstoffzuleitung a münden, so dass hier Sauerstoff O₂ eingespeist werden kann. Optional kann auch niederdruckseitig des Verdichters 12 Sauerstoff über eine Leitung m eingespeist werden.

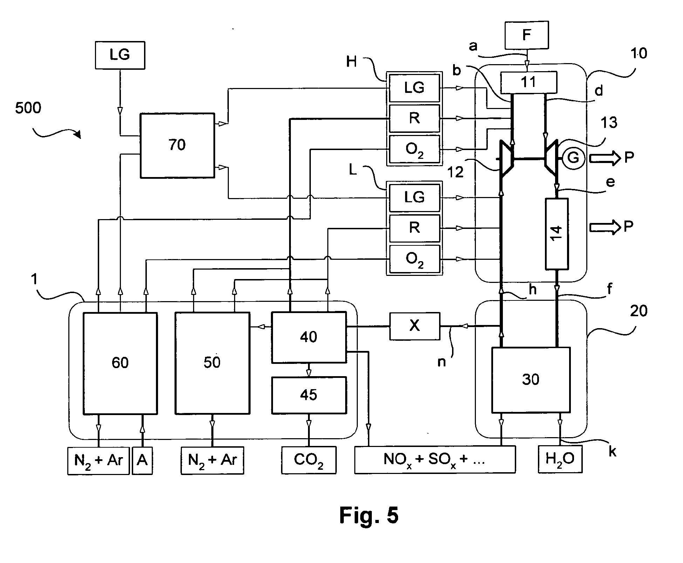

In Figur 5 ist eine Gesamtanlage gemäß einer besonders bevorzugten Ausführungsform der Erfindung schematisch dargestellt und insgesamt mit 500 bezeichnet. Die Gesamtanlage 500 weist eine Gasversorgungseinheit 1 auf. Die ebenfalls vorgesehene Gasturbineneinheit 10 und die Abgasbehandlungseinheit 20 werden nicht erneut erläutert. In die Gasturbineneinheit 10 können sowohl niederdruckseitig L als auch hochdruckseitig H entsprechende Gase oder Gasgemische eingeleitet werden. Hierbei handelt es sich, wie zuvor erläutert, um ein leichtes Inertgas LG, das zum Auffüllen entsprechender Verluste eingespeist werden kann. Ein Rest R aus einer Kohlendioxidabtrennung, der ebenfalls entsprechende Anteile des leichten Inertgases aufweist, kann ebenfalls hoch- H und niederdruckseitig L eingespeist werden. Gleiches gilt für Sauerstoff O₂, der eine ausreichende Zündfähigkeit in der Brennkammer 11 sicherstellt.

In der Anlage 500 wird über eine Leitung n eine Rauchgasfraktion X ausgeschleust. Diese enthält, wie erläutert, unter anderem Kohlendioxid CO₂ und das leichte Inertgas LG. Die Rauchgasfraktion X gelangt in eine Kohlendioxidabtrenneinrichtung 40 der Gasversorgungseinheit 1. In dieser abgetrenntes Kohlendioxid CO₂ kann in einer Kohlendioxidaufbereitungseinheit 45 weiter aufbereitet und als reines Kohlendioxid CO₂ der Anlage entnommen werden. Das Kohlendioxid CO₂ kann beispielsweise einem Sequestrierungsprozess zugeführt werden. In der Kohlendioxidabtrenneinrichtung 40 kann auch eine Entschwefelungs- und/oder Entstickungseinrichtung vorgesehen sein, so dass Schwefel- und/oder Stickoxide NOₓ, SOₓ ausgeschleust werden können. Gleiches gilt für die zuvor erläuterte Rauchgasbehandlungsanlage 30.

Verbleibendes Restgas R, das einen möglichst großen Anteil des leichten Inertgases LG aus der Rauchgasfraktion X enthält, kann aus der Kohlendioxidabtrenneinheit 40 ausgeschleust und, je nach vorliegendem Druck, der Gasturbineneinheit 10 hoch- H oder niederdruckseitig L zugeführt werden. Alternativ und/oder zusätzlich kann ein entsprechender Rest R auch einer Inertgasabtrenneinrichtung 50 zugeführt werden, in der Argon Ar und Stickstoff N₂ aus dem Restgas R abgetrennt werden können. Das wiederum verbleibende Restgas R kann entnommen und hoch- H oder niederdruckseitig L der Gasturbineneinheit 10 erneut zugeführt werden. Stickstoff N₂ und Argon Ar werden ausgeschleust und können anderweitig verwendet oder abgeblasen werden.

Eine Gasversorgungseinheit 1 kann auch eine an sich bekannte Luftzerlegungsanlage 60 umfassen, in der aus Luft A Stickstoff N₂ und Argon Ar abgetrennt werden können. Eine verbleibende Luftfraktion weist im Wesentlichen leichtes Inertgas LG in Form eines Helium-Neon-Gemischs und Sauerstoff O₂ auf. Diese verbleibende Fraktion kann in die genannten Komponenten zerlegt werden. Der hierdurch erhaltene Sauerstoff O₂ kann, ebenso wie das hierdurch erhaltene leichte Inertgas LG, hoch- H oder niederdruckseitig L in die Gasturbineneinheit 10 eingespeist werden. Das leichte Inertgas LG kann auch in einem Tank 70 zwischengespeichert werden. Der Tank 70 kann auch aus externen Quellen mit einem leichten Inertgas LG gespeist werden, beispielsweise wenn eine Luftzerlegungsanlage 60 nicht arbeitet.

Insgesamt ergibt sich durch die Kopplung einer Gasversorgungseinheit 1 mit einer zuvor erläuterten Anlage ein autonomes System, in dem kontinuierlich entsprechende Gase erzeugt und in die Gasturbineneinheit 10 eingespeist werden können.

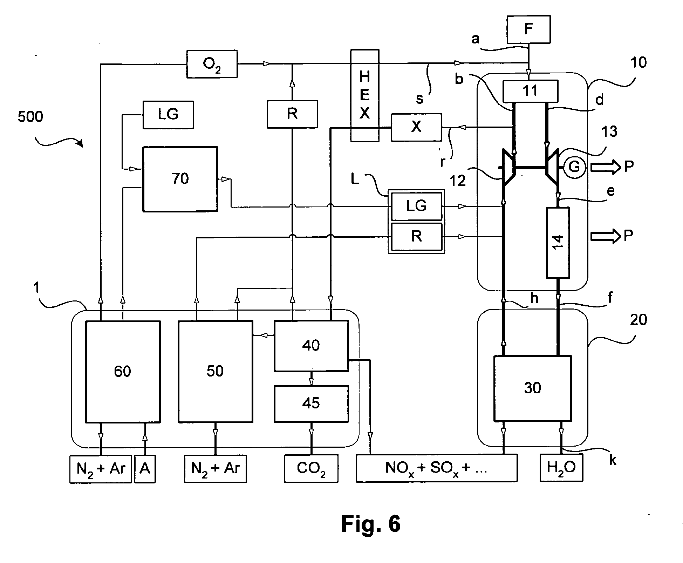

Eine weitere Ausführungsform einer entsprechenden Gesamtanlage ist in Figur 6 dargestellt und insgesamt mit 600 bezeichnet. Eine dort vorgesehene Entnahme der Rauchgasfraktion X entspricht jener der in Figur 4 erläuterten Anlage 400. Sie erfolgt hochdruckseitig des Verdichters 12 über eine Leitung r. Niederdruckseitig des Verdichters 12 kann leichtes Inertgas LG, z.B. aus einer Luftzerlegungsanlage 60 und/oder einem Tank 70 und ein Restgas R, z.B. aus einer Inertgasabtrenneinrichtung 50, eingespeist werden. Optional kann an dieser Stelle auch Sauerstoff O₂ eingespeist werden, wie in Figur 4 betreffend Anlage 400 dargestellt.

Eine Einspeisung des zuvor erläuterten Restgases R und/oder von Sauerstoff O₂ erfolgt hier jedoch vor allem durch Vereinigung entsprechender Gasströme mit einem Brennstoffstrom eines Brennstoffs F in einer Brennstoffleitung a. Das Restgas R und der Sauerstoff O₂ können hierzu zunächst vereinigt und im Gegenstrom zu der Rauchgasfraktion X in einem Wärmetauscher HEX vorgewärmt werden.

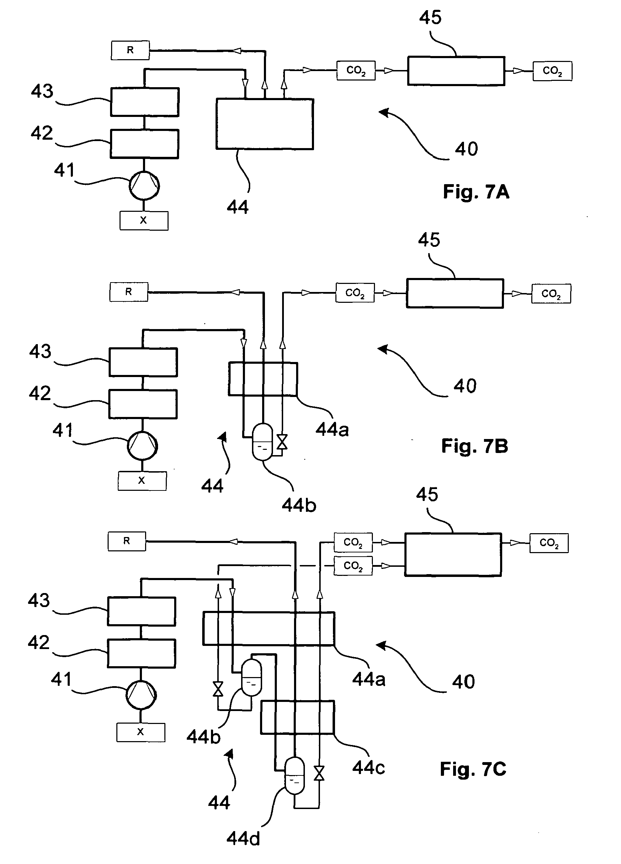

In den Teilfiguren 7A bis 7C der Figur 7 sind unterschiedliche Kohlendioxidabtrenneinrichtungen 40 dargestellt, denen jeweils eine Kohlendioxidaufbereitungseinrichtung 45 zugeordnet sein kann. Die jeweiligen Kohlendioxidabtrenneinrichtungen 40 können, ggf. zusammen mit den entsprechenden Kohlendioxidaufbereitungseinrichtungen 45, als Teil einer zuvor erläuterten Anlage 500 oder 600 ausgebildet sein.

In einer in Figur 7A dargestellten Ausführungsform einer entsprechenden Kohlendioxidabtrenneinrichtung 40 wird eine zuvor erläuterte Rauchgasfraktion X über einen Kompressor 41 verdichtet. Nach einer Kühlung der gegebenenfalls aufgeheizten Fraktion X in einer Kühleinrichtung 42 wird die komprimierte und gekühlte Rauchgasfraktion in einer Trocknungs- und Reinigungseinrichtung 43 getrocknet und aufgereinigt. Die Abtrennung von Kohlendioxid erfolgt, vorzugsweise kryogen, in einer Abscheideranlage 44. Der Abscheideranlage 44 kann Restgas R einerseits und Kohlendioxid CO₂ andererseits entnommen werden. Das Kohlendioxid CO₂ kann, wie erläutert, in der Kohlendioxidaufbereitungseinrichtung 45 aufbereitet werden.

In einer in Figur 7B dargestellten Ausführungsform ist die die Abscheideranlage 44 im Detail dargestellt. Es handelt sich hierbei um eine sogenannte Single-Flash-Abscheideranlage 44. Eine wie erläutert getrocknete und aufereinigte Rauchgasfraktion X durchläuft hierbei einen Wärmetauscher 44a im Gegenstrom zu den nachfolgend erläuterten Produkten. Nach der Abkühlung in dem Wärmetauscher 44a wird die entsprechend abgekühlte Rauchgasfraktion X einem Abscheider 44b zugeführt. Bodenseitig des Abscheiders 44b abgeschiedenes, verflüssigtes Kohlendioxid CO₂ durchläuft im Gegenstrom den Wärmetauscher 44a und kann entsprechend entnommen und in einer Kohlendioxidaufbereitungseinrichtung 45 aufbereitet werden. Der Druck der gasförmigen Fraktion nach dem erneuten Durchlaufen des Wärmetauschers 44a beträgt beispielsweise 5,2 bar oder mehr.

In einer in Figur 7C dargestellten Ausführungsform ist die Abscheideranlage 44 als sogenante Dual-Flash-Abscheideranlage ausgebildet, die im Wesentlichen eine Hintereinanderschaltung zweier Wärmetauscher 44a und 44c und entsprechender Abscheider 44b und 44d umfasst. Dies erlaubt eine vollständigere Abtrennung.

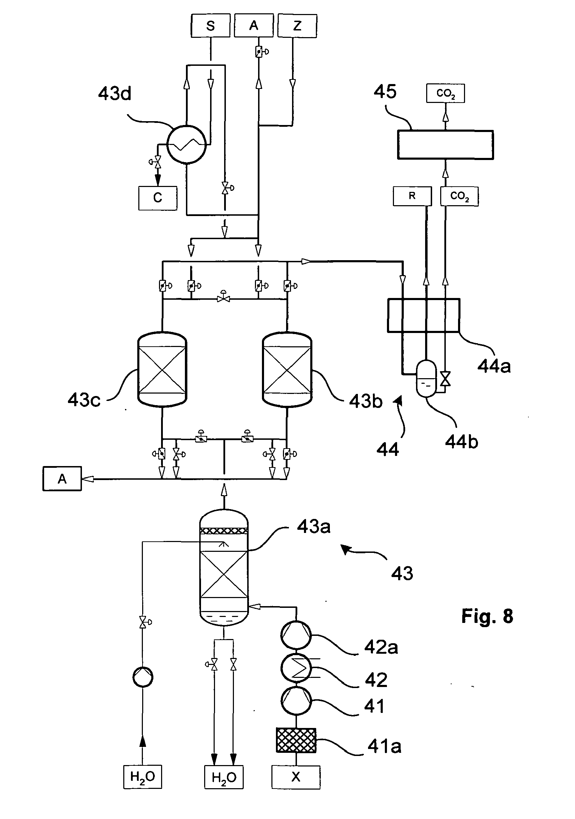

Figur 8 zeigt eine weitere Kohlendioxidabtrenneinrichtung 40 mit einer Kohlendioxidaufbereitungseinrichtung 45, wobei insbesondere die Trocknungs- und Reinigungseinrichtung 43 im Detail veranschaulicht ist. Die Kohlendioxidabtrenneinrichtung 40 weist beispielsweise eine zuvor erläuterte Single-Flash-Abscheideranlage 44 auf, kann jedoch auch mit anderen Abscheideranlagen versehen sein.

Der Anlage kann über einen Filter 41 a eine zuvor erläuterte Rauchgasfraktion X zugeführt werden. Diese kann in einem Kompressor 41 komprimiert und in einem Kühler 42 abgekühlt werden. Dem Kühler 42 kann ein weiterer Kompressor 42a nachgeschaltet sein. Mit einem Druck von beispielsweise 10 bis 40 bar kann die Rauchgasfraktion X in einen Wäscher 43a eingespeist werden, der als Teil der Trocknungs- und Reinigungseinrichtung 43 ausgebildet ist. Der Wäscher 43a kann mittels Wasser H₂O betrieben werden. Der Wäscher kann auch als Entstickungseinheit ausgebildet sein. In diesem Fall wird eine Berieselung mit verdünntem Ammoniak vorgenommen. Die hierdurch weiter aufgereinigte Rauchgasfraktion X wird in Adsorbern, beispielsweise in Molekularsiebadsorbern 43b und 43c, weiter aufgereinigt. Die Molekularsiebadsorber 43b und 43c können im Wechselbetrieb gefahren und entsprechend regeneriert werden. Zur Regeneration der Molekularsiebadsorber 43b und 43c kann mittels Dampf S erwärmte Luft A mit einem geeigneten Regenerationsgas Z verwendet werden. Zur Erwärmung ist ein Dampfheizer 43d vorgesehen. Diesem wird der Dampf S zugeführt. Entsprechendes Kondensat C wird abgeleitet.

Das weiter aufgereinigte Rauchgas gelangt anschließend beispielsweise in eine kryogene Abscheideranlage 44, wie zuvor unter Bezugnahme auf Figur 7B erläutert.

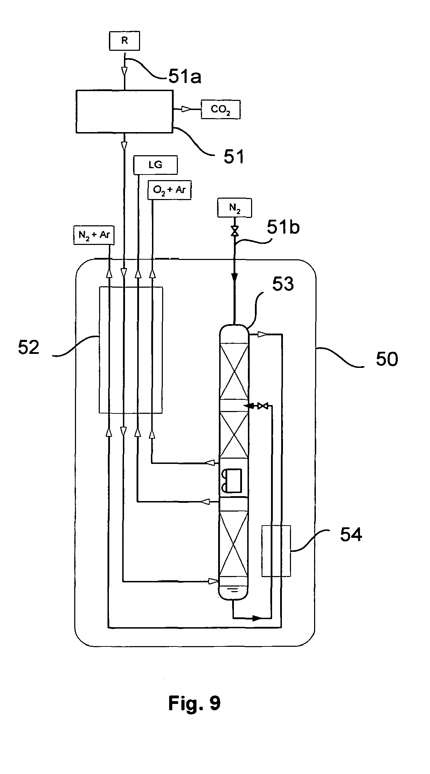

In Figur 9 ist eine Inertgasabtrenneinrichtung 50 dargestellt, die beispielsweise als Teil der in den Figuren 5 und 6 gezeigten Anlage 500 oder 600 verwendet werden kann. Eine zuvor in einer Kohlendioxidabtrenneinrichtung 40 weitgehend von Kohlendioxid CO₂ befreite Rauchgasfraktion X wird als Restgas R über eine Leitung 51 a der Anlage zugeführt. Der Inertgasabtrenneinrichtung 50 ist ein weiterer Kohlendioxidabscheider 51 zur Entfernung von Restkohlendioxid CO₂ vorgeschaltet. Die Inertgasabtrenneinrichtung 50 weist zunächst einen Wärmetauscher 52 auf, den das weiter aufgereinigte Restgas R im Gegenstrom zu Produkten der Inertgasabtrenneinrichtung 50 durchläuft. Der Inertgasabtrenneinrichtung 50 wird ein Kälteträger, z.B. flüssiger Stickstoff N₂, über eine Leitung 51 b zugeführt. Der flüssige Stickstoff wird beispielsweise in einer Luftzerlegungsanlage 60 gewonnen. Die Abtrennung von Inertgasen wie Argon Ar und Stickstoff N₂ in der Inertgasabtrenneinrichtung 50 erfolgt im dargestellten Beispiel in einem Doppelsäulensystem mit einer an sich bekannten Doppelsäule 53.

Das Restgas R wird im unteren Teil der Doppelsäule 53 mit einem Druck von beispielsweise 40 bar eingespeist. Vom Kopf der Säule kann eine Stickstoff-/Argon-Fraktion entnommen werden. Diese kann, wie erläutert, abgeblasen oder anderweitig verwendet werden. Zuvor durchläuft die Stickstoff-/Argon-Fraktion eine Unterkühleinrichtung 54 im Gegenstrom zu einem aus dem Sumpf des unteren Teils der Säule abgezogenem Gasgemisch. Letzteres wird in einen oberen Teil der Doppelsäule 53 eingespeist. Vom Kopf des unteren Säulenteils der Doppelsäule 53 wird ein Helium-Neon-Gemisch als leichtes Inertgasgemisch LG abgezogen, vom unteren Teil des oberen Säulenteils ein Sauerstoff-Argon-Gemisch. Die jeweils entnommenen Fraktionen können, wie zuvor im Zusammenhang mit der in den Figuren 5 und 6 dargestellten Anlagen 500 und 600 erläutert, weiter verwendet oder verworfen werden.

Anstatt einer Doppelsäule 53 kann im Rahmen der vorliegenden Erfindung auch beispielsweise eine Einzelsäule verwendet werden. In diesem Fall wird kein Sauerstoff-Argon-Gemisch erhalten. Die Wahl des jeweils verwendeten Säulensystems richtet sich nach den spezifischen Anforderungen.

Vorzugsweise ist eine entsprechende Inertgasabtrenneinrichtung 50 mit einer Luftzerlegungsanlage 60 gekoppelt. Beispielsweise kann dabei auch der Wärmetauscher 52 unter Verwendung von Stickstoff aus der Luftzerlegungsanlage gekühlt werden. Das ausgeschleuste Sauerstoff-Argon-Gemisch einer Doppelsäule 53, wie sie in Figur 9 dargestellt ist, kann auch direkt in eine Luftzerlegungsanlage 60 eingespeist werden und durchläuft in diesem Fall nicht den Wärmetauscher 52. Ein hierbei verwendeter Druck beträgt beispielsweise weniger als 2 bar. Eine Inertgasabtrenneinrichtung 50 kann auch beispielsweise mit einer Einzelsäule betrieben werden, der am Kopf ein Sauerstoff-Stickstoff-Argon-Gemisch entnommen und einer Luftzerlegungsanlage 60 zugeführt wird. Durch die Kopplung einer Inertgasabtrenneinrichtung 50 mit einer Luftzerlegungsanlage 60 ergeben sich damit Synergieeffekte.

Figur 10 zeigt eine Rauchgasbehandlungsanlage 30, die in einer zuvor erläuterten Rauchgasbehandlungseinheit 200 eingesetzt werden kann. Diese ist beispielsweise mit einer Entschwefelungs- und/oder Entstickungseinrichtung ausgestattet. Der Anlage wird - beispielsweise über die mehrfach erläuterte Leitung f - eine Rauchgasfraktion X zugeführt. Die Rauchgasfraktion X gelangt in die als Wäscher 31 ausgebildete Entstickungs- und/oder Entschwefelungseinrichtung, die mit Wasser H₂O aus einem Wasserbehandlungskreislauf 32 betrieben werden kann. Das Wasser H₂O wird in dem Wasserbehandlungskreislauf 32 mit geeigneten Chemikalien Y beaufschlagt und aufbereitet. Aus der Wasseraufbereitung fällt Abfall W an, dessen Bestandteile sich nach der spezifischen Konfiguration der Entschwefelungs- und/oder Entstickungseinrichtung richten. Entsprechender Abfall enthält beispielsweise Schwefel- SOₓ und/oder Stickoxide NOₓ und wird über eine ebenfalls mehrfach erläuterte Leitung k abgeschieden.

Nach dem Durchlaufen des Wäschers 31 gelangt eine gasförmige Fraktion in einen Direktkontaktkühler 33. Auch dieser wird Wasser H₂O betrieben. Die aufgereinigte und gekühlte Rauchgas kann der Gasturbine 12 über Leitung h zugeführt werden.

Auch die Rauchgasbehandlungsanlage 30 kann unterschiedlich ausgebildet sein, beispielsweise kann ein Direktkontaktkühler 33 gleichzeitig als Entstickungs- und Entschwefelungseinheit betrieben werden oder der Wäscher 31 und der Direktkontaktkühler 33 der Figur 10 können in Form einer Doppelsäule baulich zusammengefasst sein.

### Bezugszeichenliste

- 1: Gasversorgungseinheit
- 10: Turbineneinheit
- 11: Brennkammer
- 12: Verdichter
- 13: Gasturbine
- 14: Abhitzekessel

- 20: Rauchgasbehandlungseinheit
- 21: Rauchgaskühler
- 22: Abscheider

- 30: Rauchgasbehandlungsanlage
- 31: Wäscher
- 32: Wasserbehandlungskreislauf

- 40: Kohlendioxidabtrenneinrichtung
- 41: Kompressor
- 41a: Filter
- 42: Kühleinrichtung
- 42a: Kompressor

- 43: Trockungs- und Reinigungseinrichtung
- 43a: Wäscher
- 43b, 43c: Molekularsiebabsorber
- 43d: Dampfheizer
- 44: Abscheideranlage
- 44a: Wärmetauscher
- 44b: Abscheider
- 45: Kohlendioxidaufbereitungseinheit

- 50: Inertgasabtrenneinrichtung

- 51: Kohlendioxidabscheider
- 51 a, 51 b: Leitung
- 52: Wärmetauscher
- 53: Doppelsäule
- 54: Unterkühlungseinrichtung

- 60: Luftzerlegungsanlage

- 70: Tank

- 100, 200, 300, 400: Energieerzeugungsanlage
- 500, 600: Gesamtanlage

- a-s: Leitungen
- A: Luft
- Ar: Argon
- C: Kondensat
- CO₂: Kohlendioxid
- F: Brennstoff
- G: Generator
- H: Hochdruckbereich
- L: Niederdruckbereich
- LG: Leichtes Inertgas
- N₂: Stickstoff
- O₂: Sauerstoff
- P: Leistung
- R: Rest
- S: Dampf
- SOₓ: Schwefeloxide
- SOₓ: Stickoxide
- W: Abfall
- w: Welle
- X: Rauchgasfraktion
- Y: Chemikalien
- Z: Regenerationsgas

## Patentansprüche

1. Verfahren zum Betreiben einer Gasturbineneinheit (10), bei dem durch Verbrennung eines Brennstoffs (F) in einer komprimierten Gasatmosphäre in einer Brennkammer (11) ein Heißgas erzeugt und mit dem Heißgas eine Gasturbine (13) angetrieben wird, **dadurch gekennzeichnet, dass** die Gasatmosphäre mit wenigstens einem leichten Inertgas (LG) angereichert wird.

2. Verfahren nach Anspruch 1, bei dem die Gasatmosphäre mit wenigstens 24 ppm Helium und/oder Neon als leichtem Inertgas (LG) angereichert wird.

3. Verfahren nach Anspruch 1 oder 2, bei dem zur Erzeugung der Gasatmosphäre wenigstens eine aus dem Heißgas erzeugte Gasfraktion, Sauerstoff und/oder das wenigstens eine leichte Inertgas (LG) verwendet wird.

4. Verfahren nach einem der vorstehenden Ansprüche, bei dem das nach der Verbrennung in dem Heißgas enthaltene wenigstens eine leichte Inertgas (LG) zu wenigstens 90% erneut der Gasatmosphäre zugeführt wird.

5. Gasturbineneinheit (10), die einen Verdichter (12), eine Brennkammer (11) und eine Gasturbine (13) aufweist, **gekennzeichnet durch** Mittel (h, l, q, s) zur Einspeisung wenigstens eines mit einem leichtem Inertgas (LG) angereicherten Gasstroms in die Brennkammer (11).

6. Gasturbineneinheit (10) nach Anspruch 5, bei der die Mittel (h, l, q, s) zur Einspeisung des wenigstens einen mit einem leichtem Inertgas (LG) angereicherten Gasstroms in die Brennkammer (11) stromauf der Brennkammer (11) oder des Verdichters (12) angeordnete Zuleitungen (l, q, s) für das wenigstens eine leichte Inertgas (LG) und/oder einen das wenigstens eine leichte Inertgas (LG) aufweisenen Gasstrom umfassen.

7. Gasturbineneinheit (10) nach Anspruch 5 oder 6, bei der die Mittel (h, l, q, s) zur Einspeisung des wenigstens einen mit einem leichtem Inertgas (LG) angereicherten Gasstroms in die Brennkammer (11) wenigstens eine Rückführleitung (h) umfassen, die mit einer Rauchgasleitung (f) aus der Gasturbine (13) verbunden ist.

8. Energieerzeugungsanlage (200, 300, 400) mit einer Gasturbineneinheit (10) nach einem der Ansprüche 5 bis 7 und mit einer Rauchgasbehandlungseinheit (20), die dafür eingerichtet ist, wenigstens eine Komponente eines aus einer Verbrennung in der Brennkammer (11) resultierenden Rauchgases abzutrennen und den Rest des Rauchgases der Brennkammer (11) erneut zuzuführen.

9. Energieerzeugungsanlage (200, 300, 400) nach Anspruch 8, bei der die Rauchgasbehandlungseinheit (20) dafür eingerichtet ist, wenigstens 95% eines leichten Inertgases (LG) in dem Rauchgas der Brennkammer (11) erneut zuzuführen.

10. Energieerzeugungsanlage (200, 300, 400) nach einem der Ansprüche 8 oder 9, die eine Luftzerlegungsanlage (60) aufweist, die dafür eingerichtet ist, zumindest Sauerstoff und/oder das wenigstens eine leichte Inertgas (LG) zur Einspeisung in die Gasturbineneinheit (10) bereitzustellen.

11. Energieerzeugungsanlage (200, 300, 400) nach einem der Ansprüche 8 bis 10, die eine Kohlendioxid- (40) und/oder eine Inertgasabtrenneinrichtung (50) zur Abtrennung von Kohlendioxid bzw. Inertgas aus dem Rauchgas aufweist.

12. Energieerzeugungsanlage (200, 300, 400) nach Anspruch 11, bei der die Kohlendioxidabtrenneinrichtung (40) und/oder die Inertgasabtrenneinrichtung (50) eine Entschwefelungs- und/oder Entstickungseinrichtung umfasst.

13. Energieerzeugungsanlage (200, 300, 400) nach Anspruch 11 oder 12, bei der die Kohlendioxidabtrenneinrichtung (40) wenigstens eine kryogene Kohlendioxidabscheideranlage (44) und/oder einen chemischen Wäscher umfasst.

14. Energieerzeugungsanlage (200, 300, 400) nach einem der Ansprüche 11 bis 13, bei der die Inertgasabtrenneinrichtung (50) wenigstens einen kryogenen Abscheider, insbesondere einen Abscheider einer gemäß Anspruch 10 vorgesehenen Luftzerlegungsanlage (60), umfasst.

15. Steuereinrichtung, insbesondere einer Gasturbineneinheit (10) nach einem der Ansprüche 5 bis 7 oder einer Energieerzeugungsanlage (200, 300, 400) nach einem der Ansprüche 8 bis 14, die zur Durchführung eines Verfahrens nach einem der Ansprüche 1 bis 4 eingerichtet ist, mit Mitteln, die dafür eingerichtet sind, einen Anteil des wenigstens einen leichten Inertgases (LG) in der Gasatmosphäre zu bestimmen und/oder zu erhöhen.
